# EUROPEAN PATENT APPLICATION

(11) **EP 1 605 255 A1**
(43) Date of publication of application: **14.12.2005**
(21) Application number: 05012248.0
(22) Date of filing: 07.06.2005
(51) Int. Cl.: G01N 27/407

(54) **Oxygen-concentration detecting element and method of producing same**

(30) Priority: 10.06.2004 JP 2004172402; 10.06.2004 JP 2004172414
(71) Applicant: Hitachi, Ltd., Tokyo 100-8280 (JP)
(72) Inventor: Sakai, Shoichi c/o Hitachi Ltd., Isesaki-shi Gunma 372-0023 (JP); Ichiyanagi, Futoshi c/o Hitachi Ltd., Isesaki-shi Gunma 372-0023 (JP); Onozuka, Junji c/o Hitachi Ltd., Isesaki-shi Gunma 372-0023 (JP); Orimo, Yasuji c/o Hitachi Ltd., Isesaki-shi Gunma 372-0023 (JP)
(74) Representative: Weber, Joachim

(57) **Abstract**

The invention relates to an oxygen-concentration detecting element including (a) a base member of a first insulating material; (b) an electric heater layer formed on the base member to generate a heat when electrically energized; and (c) an oxygen-detecting laminated unit formed on the base member, the unit including a solid electrolyte layer and inner and outer electrodes interposing the solid electrolyte layer therebetween. The inner electrode may be constructed of a noble metal material and voids that are dispersed in the noble metal material and are derived from a void forming agent. The oxygen-concentration detecting element may include a penetration layer for allowing penetration of oxygen therethrough, between the outer surface of the base member and the oxygen-detecting laminated unit. The penetration layer is extended in the axial direction of the base member from the position of the unit.

## Description

### BACKGROUND OF THE INVENTION

The present invention relates in general to an oxygen sensor and a method of producing the same and more specifically to an oxygen-concentration detecting element used for the oxygen sensor and a method of producing the element.

In general, a modernized motor vehicle powered by an internal combustion engine is equipped at its exhaust pipe with an oxygen sensor for sensing the oxygen concentration of the exhaust gas from the engine, and, based on the oxygen concentration thus sensed, the air/fuel mixture fed to the engine is feedback controlled to have a stoichiometric ratio (i.e., A/F = 14.7).

US Patent 6,613,207, corresponding to Japanese Patent Laid-open Publication JP-A-2000-180403, discloses an electrochemical measuring sensor. As shown in Fig. 1 of this US patent, the electrochemical measuring sensor has a Nernst foil 10 made of a solid-electrolyte body. When there occurs an oxygen concentration difference between the top and bottom surfaces of the Nernst foil 10, oxygen ions are transported through the Nernst foil 10. With this, an electromotive force is generated between a reference electrode 16 and a measuring electrode 17 in accordance with the oxygen concentration difference, thereby obtaining a corresponding output voltage.

Japanese Patent Laid-open Publication JP-A-6-27080 discloses an air-fuel ratio sensor (see Fig. 1), in which overflow of the reference oxygen is discharged into the exhaust gas through a porous attachment layer 35, a charged powdery layer 33 and a refractory attachment agent 21.

### SUMMARY OF THE INVENTION

Each of the above-mentioned conventional sensors has a problem that excess of oxygen increases the sensor interior pressure. If this pressure increases too much, the sensor may be damaged.

It is therefore an object of the present invention to provide an oxygen-concentration detecting element, which is capable of suppressing the sensor interior pressure increase caused by excess of oxygen.

It is another object of the present invention to provide a method of producing the oxygen-concentration detecting element.

According to a first aspect of the present invention, there is provided an oxygen-concentration detecting element comprising:
a base member constructed of an insulating material, an outer surface of the base member having a first position and a second position that is different from the first position;
an electric heater layer formed on the first position of the base member to generate a heat when electrically energized; and
an oxygen-detecting laminated unit formed on the second position of the base member, the unit including:
   (a) a solid electrolyte layer that is activated by the heat from the electric heater layer;
   (b) an outer electrode formed on an outer surface of the solid electrolyte layer; and
   (c) an inner electrode formed on an inner surface of the solid electrolyte layer to be opposed to the outer electrode, the inner electrode being constructed of a noble metal material and a plurality of voids dispersed in the noble metal material, the voids being derived from a void forming agent that has been contained in an amount of 30-50 volume %, based on a total volume of the noble metal material, prior to a baking for producing the oxygen-concentration detecting element.

According to the first aspect of the present invention, there is provided a method of producing an oxygen-concentration detecting element, comprising the steps of:
(a) preparing a base member constructed of an insulating material to have an outer surface having a first position and a second position that is different from the first position;
(b) forming an electric heater layer on the first position of the base member to generate a heat when electrically energized;
(c) forming an inner electrode on the second position of the base member, the inner electrode being constructed of a noble metal material and a void forming agent that is in an amount of 30-50 volume %, based on a total volume of the noble metal material;
(d) forming a solid electrolyte layer on the inner electrode;
(e) forming an outer electrode on the solid electrolyte layer such that there is provided an oxygen-detecting laminated unit including the solid electrolyte layer and the inner and outer electrodes between which the solid electrolyte layer is operatively sandwiched and that the solid electrolyte layer is activated by the heat from the electric heater layer; and
(f) baking a green body having the base member, the electric heater and the oxygen-detecting laminated unit such that the void forming agent disappears to produce a plurality of voids in the inner electrode and to make the inner electrode have a porous structure.

According to a second aspect of the present invention, there is provided an oxygen-concentration detecting element comprising:
a base member constructed of an insulating material, an outer surface of the base member having a first position and a second position that is different from the first position;
an electric heater layer formed on the first position of the base member to generate a heat when electrically energized;
an oxygen-detecting laminated unit formed on the second position of the base member, the unit including a solid electrolyte layer and a pair of electrodes between which the solid electrolyte layer is operatively sandwiched, the solid electrolyte layer being activated by the heat from the electric heater layer; and
a penetration layer for allowing penetration of oxygen through the penetration layer, the penetration layer being formed between the outer surface of the base member and the oxygen-detecting laminated unit at the second position of the base member, the penetration layer being extended in a direction along an axis of the base member from a position of the oxygen-detecting laminated unit.

The other objects and features of this invention will become understood from the following description with reference to the accompanying drawings.

### BRIEF DESCRIPTION OF THE DRAWINGS

Fig. 1 is a side view showing an oxygen-concentration detecting element according to an embodiment of the present invention;
Fig. 2 is an enlarged sectional view taken along lines 2-2 of Fig. 1;
Fig. 3 is a flow chart showing a method of producing the oxygen-concentration detecting element in accordance with an embodiment of the present invention;
Fig. 4 is a layout of the oxygen-concentration detecting element;
Fig: 5 is another layout of the oxygen-concentration detecting element;
Fig. 6 is a sectional view showing an exemplary oxygen sensor equipped with the oxygen-concentration detecting element; and
Fig. 7 is a view similar to Fig. 6, but showing another exemplary oxygen sensor.

### DESCRIPTION OF THE PREFERRED EMBODIMENTS

It is possible to combine the first and second aspects of the present invention together. In other words, an oxygen-concentration detecting element of the present invention may be provided with both of the above-mentioned inner electrode according to the first aspect and the above-mentioned penetration layer according to the second aspect of the present invention. With this, it is possible to further surely suppress the sensor interior pressure increase caused by excess of oxygen.

According to the first aspect of the present invention, a part of oxygen supplied to the inner electrode can be discharged toward harness through the sensor interior, thereby preventing damage to the oxygen-concentration detecting element.

In the first aspect of the present invention, prior to a baking or sintering for producing the oxygen-concentration detecting element, the inner electrode contains 30-50 volume % of a void forming agent, based on the total volume (100 volume %) of the noble metal material contained in the inner electrode. The range of 30-50 volume % may further be limited to 30-40 volume %. This void forming agent disappears by the baking, thereby making the inner electrode have a porous structure having a plurality of voids. With this, a part (an excess) of oxygen supplied to the inner electrode can be discharged from the inner electrode to an end portion of the element. Therefore, it is possible to prevent damage to the element caused by the supplied oxygen pressure increase. Furthermore, it is possible to store a sufficient amount of oxygen in the inner electrode.

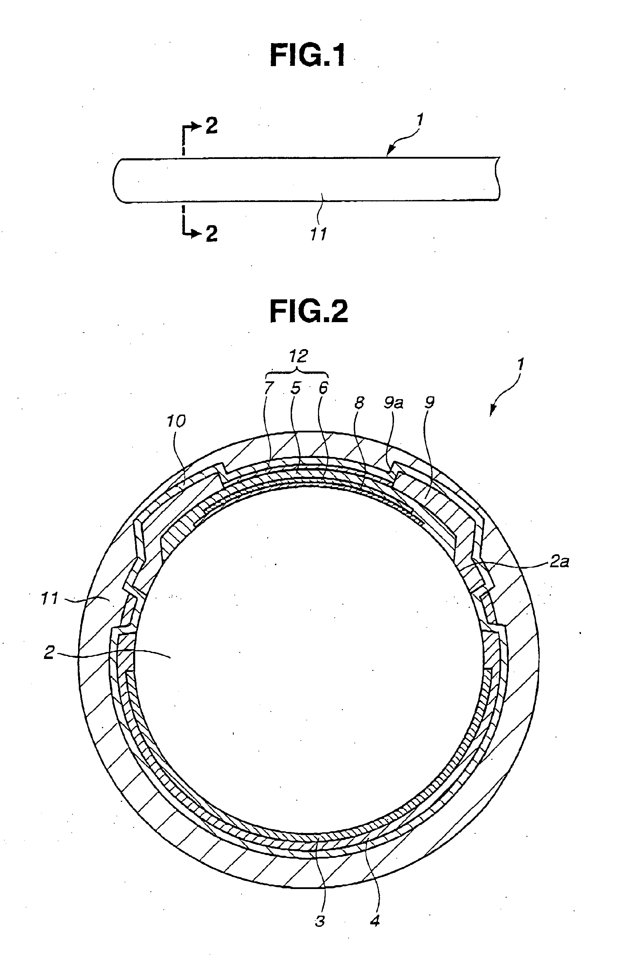

With reference to Figs. 1-4 and 6, an oxygen-concentration detecting element according to an embodiment of the first aspect of the present invention will be described in detail in the following.

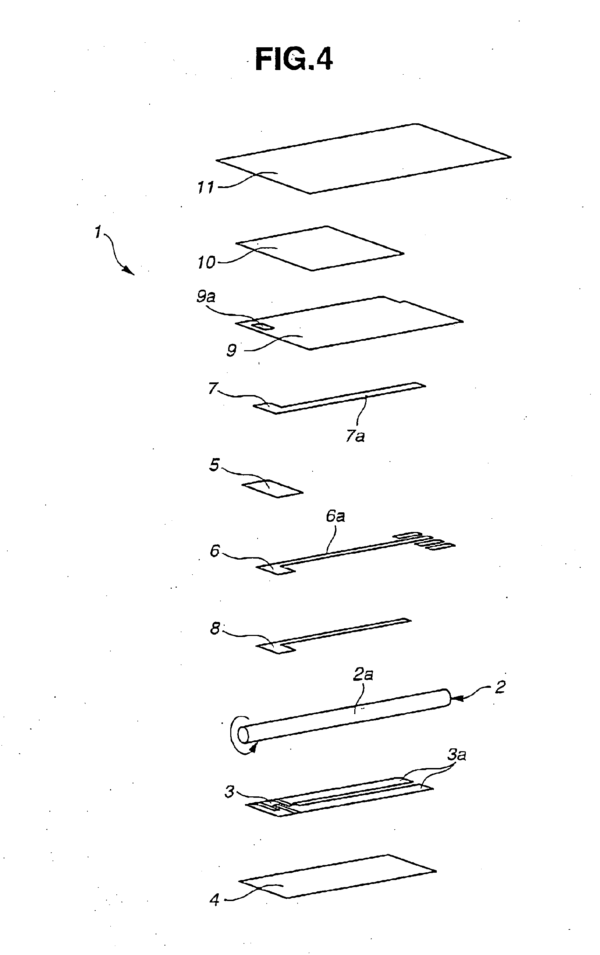

As shown in Fig. 1, oxygen-concentration detecting element 1 has an elongated cylindrical shape. As shown in Figs. 2 and 4, oxygen-concentration detecting element 1 has core rod (or base member) 2, heater pattern (or electric heater layer) 3 formed on a half-cylindrical region (or a first position) of circumferential or outer surface 2a of core rod 2, heater insulating layer 4 entirely covering the outer surface of heater pattern 3, solid electrolyte layer 5 that is disposed on circumferential surface 2a of core rod 2 at a diametrically opposed zone (or a second position) of heater pattern 3, reference electrode (or inner electrode) 6 formed on an inner surface of solid electrolyte layer 5, detecting electrode (or outer electrode) 7 formed on an outer surface of solid electrolyte layer 5, stress damping layer 8 that is intimately disposed between an inner surface of reference electrode 6 and circumferential surface 2a of core rod 2, dense layer 9 that covers the outer surface of solid electrolyte layer 5 and detecting electrode 7, rectangular window opening 9a (see Fig. 4) defined in dense layer 9, printed protecting layer 10 covering dense layer 9 and heater insulating layer 4, and spinel protecting layer 11 entirely covering printed protecting layer 10.

Core rod 2 is constructed of a ceramic material (e.g., alumina) as an insulating material. Core rod 2 is formed as a cylindrical solid member. With this, it is possible to minimize the influences due to the fixing direction of core rod 2 and due to the gas flow direction. Thus, it is possible to obtain a stable output characteristic.

Heater pattern 3 is constructed of a conductive material, such as tungsten, platinum or the like that generates heat when electrically energized. Heater pattern 3 is integrally formed with lead line portions 3a (see Fig. 4). That is, when electrically energized through lead line portions 3a, heater pattern 3 generates heat for heating and thus activating solid electrolyte layer 5.

Heater insulating layer 4 is constructed of an insulating material and functions to insulate heater pattern 3 from the surrounding parts.

Solid electrolyte layer 5 is constructed of a material that includes zirconia as a major material. For production of solid electrolyte layer 5, a powder of zirconia and a given wt% of powder of yttria can be mixed together to prepare a paste material. As will be described hereinafter, this paste material applied (a green body) is baked together with other laminated layers. Solid electrolyte layer 5 generates, between reference and detecting electrodes 6 and 7, an electromotive force in accordance with the difference in oxygen concentration of surrounding atmosphere. That is, due to the difference in oxygen concentration, oxygen ions are moved in solid electrolyte layer 5 in the direction along the thickness of the layer 5.

Solid electrolyte layer 5 and reference and detecting electrodes 6 and 7 thus constitute oxygen detecting laminated unit 12 that converts the detected oxygen concentration to a corresponding electric signal.

Both reference and detecting electrodes 6 and 7 are constructed of a conductive material (e.g., platinum) and allows oxygen gas to penetrate therethrough. As is seen from Fig. 4, reference and detecting electrodes 6 and 7 are respectively formed with lead line portions 6a and 7a. That is, the output power produced between reference and detecting electrodes 6 and 7 is lead to a meter section (not shown) through lead line portions 6a and 7a.

As stated above, reference electrode 6 contains a noble metal (e.g., gold, silver, ruthenium, rhodium, palladium, osmium, iridium, and platinum) and a void forming agent (e.g., theobromine) is patterned and then baked. With this, reference electrode 6 is provided with a porous structure.

The void forming agent of reference electrode 6 is in an amount of 30 to 50 volume %, based on the total volume (100 volume %) of the noble metal. Herein, the effect of the amount of the void forming agent on element 1 is explained with reference to Table 1. As shown in Table 1, when the amount of the void forming agent is 51 volume % or greater, reference electrode 6 becomes inferior in formability and may be broken. On the other hand, when it is less than 30 volume %, it is not possible to sufficiently obtain continuous penetration voids in reference electrode 6. Therefore, it is not possible to obtain a sufficient oxygen penetration through reference electrode 6. With this, element 1 may be broken. It is possible by containing 30-50 volume % of the void forming agent to obtain an oxygen-concentration detecting element having a superior formability of reference electrode 6 and the element break prevention.

**Table 1**

| | Amount of Void Forming Agent | | |
|---|---|---|---|
| | Less than 30 vol. % | 30 to 50 vol. % | Not less than 51 vol. % |
| Formability of Reference Electrode | Superior | Superior | Inferior |
| Existence of Continuous Penetration Voids | No | Yes | Yes |

The void forming agent is preferably in the form of particles having an average particle diameter of 5µm or less. If it is greater than 5µm, the void forming agent may not be uniformly dispersed in the noble metal material. With this, the formation of the oxygen escaping passages in reference electrode may become insufficient. If it is 5µm or less, the average diameter of the resulting voids can be 10µm or less. With this, it becomes possible to surely form a plurality of voids that are necessary for discharging excess of oxygen, in reference electrode 6.

Stress damping layer 8 is constructed of a ceramic mixture of an insulating material (e.g., alumina) and a solid electrolyte material (e.g., zirconia). Stress damping layer 8 functions to damp the stress difference that would be produced between solid electrolyte 5 and core rod 2 during the baking of a green body of solid electrolyte 5. In addition to this function, stress damping layer 8 forms gas escaping passages through which oxygen gas that has been transmitted to reference electrode 6 through solid electrolyte layer 5 is led to escaping paths (not shown).

Dense layer 9 is constructed of a material, such as a ceramic material like alumina, which does not permit penetration of oxygen gas therethrough. Dense layer 9 entirely covers the outer surface of solid electrolyte layer 5. Detecting electrode 7 is exposed to window opening 9a of dense layer 9. That is, in use, oxygen gas is led to detecting electrode 7 through only window opening 9a.

Printed protecting layer 10 entirely covers outer surfaces of dense layer 9 and heater insulating layer 4, as well as an outer surface of detecting electrode layer 7 that is exposed to window opening 9a of dense layer 9. Printed protecting layer 10 has a porous structure and is constructed of a material that does not permit penetration of harmful gases, dusts and the like in the exhaust gas therethrough, but permits penetration of oxygen gas therethrough. The material is, for example, a mixture of alumina and magnesium oxide.

Spinel protecting layer 11 entirely covers printed protecting layer 10 and serves as the outermost layer of oxygen-concentration detecting element 1. Spinel protecting layer 11 is constructed of a porous material that permits penetration of oxygen gas therethrough. Spinel protecting layer 11 is rougher in porosity than printed protecting layer 10 is.

In the following, operation of oxygen-concentration detecting element 1 will be briefly described in case that a corresponding oxygen sensor is set in an exhaust pipe that extends from an internal combustion engine (not shown). That is, upon assembly, the outer surface of element 1 is exposed to the interior of the exhaust pipe through openings of the case of the oxygen sensor, and stress damping layer 8 is communicated with the atmosphere.

Upon operation of the engine, heater pattern 3 is energized to generate heat for heating and thus activating solid electrolyte layer 5. With this, the oxygen concentration detecting ability of element 1 is increased.

Under operation of the engine, the exhaust gas from the engine passes by the outer surface of element 1. During this flow of the exhaust gas, oxygen in the exhaust gas is led to solid electrolyte layer 5 through spinel protecting layer 11, printed protecting layer 10 and detecting electrode 7, and at the same time, oxygen in the atmosphere is collected around reference electrode 6. Upon this, since reference electrode 6 has a porous structure, excessive oxygen is discharged to an end portion of element 1, thereby preventing the element interior pressure increase by oxygen.

When a difference in oxygen concentration is produced between outer and inner surfaces of solid electrolyte layer 5, oxygen ions are moved in solid electrolyte layer, thereby producing an electromotive force between reference and detecting electrodes 6 and 7. Thus, output voltage is obtained, which varies in accordance with the oxygen concentration difference.

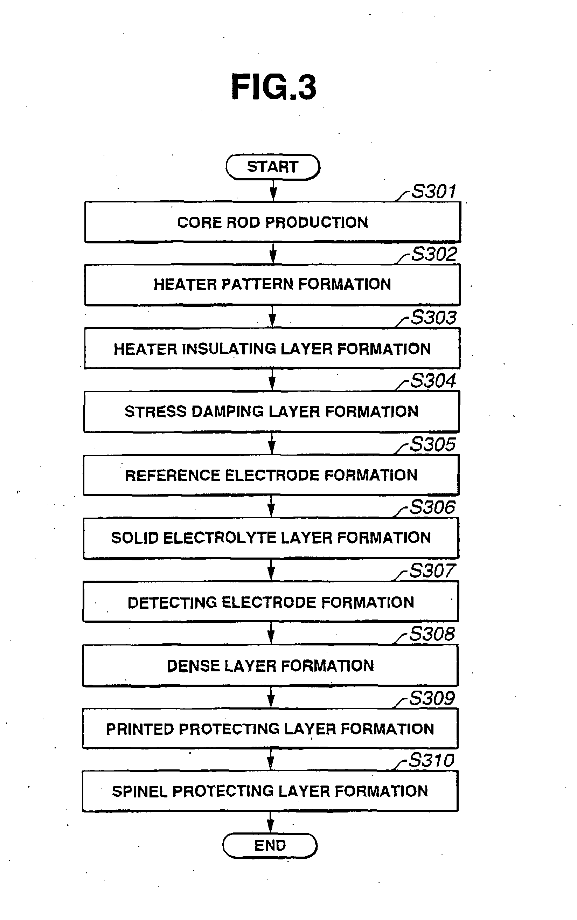

In the following, a method of producing oxygen-concentration detecting element 1 will be described in accordance with an embodiment of the present invention with reference to Figs. 3 and 4.

First, core rod 2 is produced as a cylindrical solid member from a ceramic material (e.g., alumina) through injection molding (S301). Then, while rotating core rod 2, a paste material is applied to a cylindrical half zone of outer surface 2a of core rod 2 by a curved-surface, screen printing using a heating material (e.g., platinum or tungsten), thereby forming heater pattern 3 and its lead line portions 3a (S302). Then, heater insulating layer 4 is formed on heater pattern 3 and lead line portions 3a by a curved-surface, screen printing using alumina or the like (S303).

Then, stress damping layer 8 is formed on outer surface 2a of core rod 2 at a diametrically opposite zone of the printed heater pattern 3 through curved-surface screen printing (S304). Then, a mixture of a conductive paste or noble metal material (e.g., platinum) and 30-50 volume % of a void forming agent is applied thereto by a curved-surface, screen printing, thereby monolithically forming reference electrode 6 and its lead portions 6a (S305).

Then, a paste material (e.g., a mixture of zirconia and yttria) is applied in a manner to cover reference electrode 6, stress damping layer and the like as shown in Fig. 2 by curved-surface screen printing, thereby forming solid electrolyte layer 5 that is oxygen ion conductive (S306).

Then, a conductive paste (e.g., platinum) is applied to solid electrolyte layer 5 and the like by curved-surface screen printing, thereby monolithically forming detecting electrode 7 and its lead line portions 7a (S307). Then, a ceramic material (e.g., alumina) is applied to detecting electrode 7 and solid electrolyte layer 5 by curved-surface screen printing, thereby forming dense layer 9 having window opening 9a (S308). A center portion of detecting electrode 7 is exposed to window opening 9a of dense layer 9, and this exposed center portion serves as an effective electrode portion.

Then, a paste material (e.g., a mixture of alumina and magnesium oxide) is applied by curved-surface screen printing to entirely cover outer surface 2a of core rod 2 in its circumferential direction, thereby forming printed protecting layer 10 (S309). Similarly, spinel protecting layer 11 is formed to entirely cover outer surface 2a of core rod 2 in its circumferential direction (S310). With this, curved-surface screen printing steps are terminated.

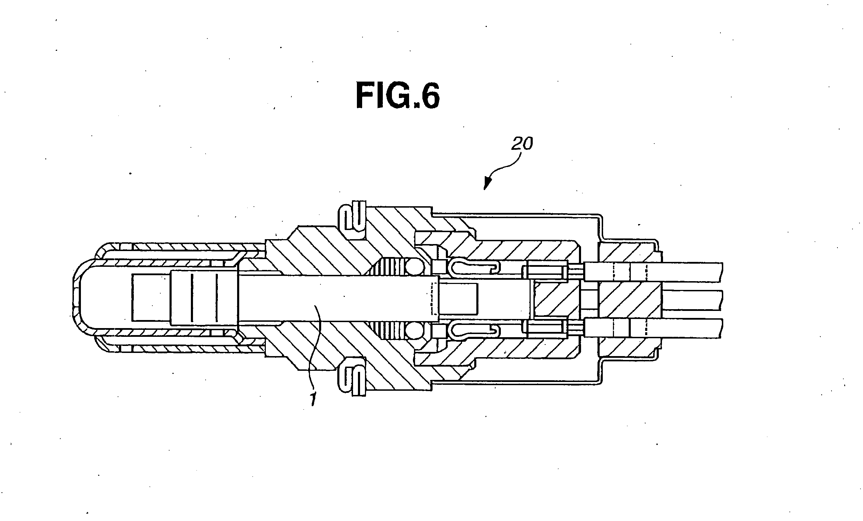

Then, a cylindrical green body resulting from the above-mentioned curved-surface screen printings and the like is baked at high temperature (e.g., 1200-1600°C), thereby monolithically sintering this green body. Upon this, the void forming agent disappears in reference electrode 6 to form a plurality voids therein. With this, reference electrode 6 is made to have a porous structure, and thus the production of oxygen-concentration detecting element 1 is completed. The completed element 1 can be built in oxygen sensor 20, as shown in Fig. 6.

According to the second aspect of the present invention, the penetration layer is provided for discharging excess of oxygen supplied to the electrode. Therefore, it is possible to suppress the element interior pressure increase caused by excess of oxygen and thereby to prevent damage to the element.

In the second aspect of the present invention, the penetration layer is formed between the outer surface of the base member and the oxygen-detecting laminated unit at the second position of the base member. Furthermore, the penetration layer is extended in the axial direction of the base member from a position of the oxygen-detecting laminated unit. With this, it is possible to effectively transmit heat from the electric heater layer to the solid electrolyte layer. Furthermore, it is possible to discharge an excess of oxygen toward harness, thereby suppressing the element interior pressure increase to prevent damage to the element.

With reference to Figs. 1-3, 5 and 7, an oxygen-concentration detecting element according to an embodiment of the second aspect of the present invention will be described in detail in the following. Since this element is similar in construction to the above-mentioned element according to an embodiment of the first aspect of the present invention, the following description may be directed to only the parts, constructions, operation and production method, which are different from those of the first aspect of the present invention.

In contrast with the first aspect of the present invention, reference electrode 8 prior to baking does not contain a void forming agent.

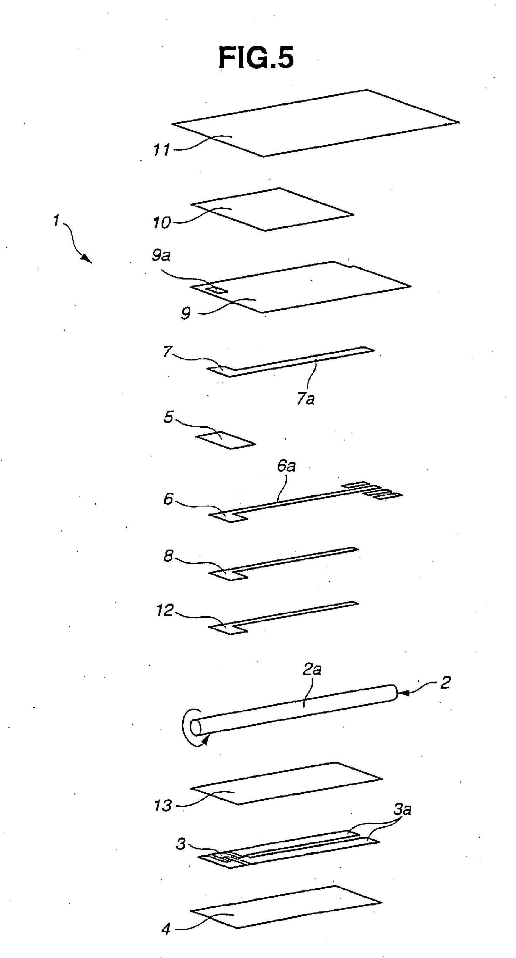

As shown in Figs. 2 and 5, oxygen-concentration detecting element 1 has stress damping layer (or penetration layer) 8 for allowing penetration of oxygen therethrough. Stress damping layer 8 is extended in the axial direction of core rod 2 from the position of oxygen-detecting laminated unit 12 (Fig. 5).

Stress damping layer 8 is constructed of a ceramic mixture of an insulating material (e.g., alumina) and a solid electrolyte material (e.g., zirconia). The insulating material content of stress damping layer 8 may be 10wt% to 80wt%. With this, it is possible to more assuredly damp stress difference that would be produced between stress damping layer 8 and core rod 2. Thus, it is possible to prevent separation of stress damping layer 8 from core rod 2.

Herein, the effect of the insulating material content of stress damping layer (SDL) 8 on the baking contraction rate of stress damping layer 8 is explained with reference to Table 2. As shown in Table 2, contraction rate in baking stress damping layer 8 becomes 16 to 18% by adjusting the insulating material content to 10-80%. Since contraction rate of alumina core rod 2 is about 17%, it is understood that the contraction rate difference between stress damping layer 8 and core rod 2 becomes zero or very small by adjusting the insulating material content to 10-80%. With this, it become possible to effectively damp stress difference that would be produced between stress damping layer 8 and core rod 2 during the baking.

**Table 2**

| | Insulating Material Content of SDL | | |
|---|---|---|---|
| | Less than 10wt% | 10-80 wt% | Not less than 81 wt% |
| Baking Contraction Rate | Not less than 19% | 16-18% | Not greater than 15% |
| Baking Contraction Rate Diff. between SDL and Core Rod | Large | Appropriate | Large |
| Baking Contraction Rate of Alumina Core Rod: about 17% | | | |

Alternatively, stress damping layer 8 may be constructed of 100% of an insulating material. With this, it is possible to have a secure insulation between oxygen-detecting laminated unit 12 and core rod 2. Furthermore, it is possible to discharge an excess of oxygen toward harness, thereby suppressing the element interior pressure increase to prevent damage to the element.

Stress damping layer 8 may be prepared by adding a void forming agent to a ceramic mixture of insulating material and solid electrolyte material. Upon baking, this void forming agent disappears to make stress damping layer 8 have a porous structure having a plurality of voids. Therefore, it is possible to discharge an excess of oxygen, which has been supplied from reference electrode 6, to an end portion of element 1, thereby preventing damage to element 1 caused by oxygen pressure increase.

The void forming agent of stress damping layer 8 is in an amount of 30 to 50 volume %, based on the total volume (100 volume %) of the ceramic mixture of stress damping layer 8. With this, it is possible to more assuredly discharge excess of oxygen toward harness, thereby suppressing the element interior pressure increase to prevent damage to the element. Herein, the effect of the amount of the void forming agent on element 1 is explained with reference to Table 3. As shown in Table 3, when the amount of the void forming agent is 51 volume % or greater, stress damping layer 8 becomes inferior in formability and may be broken. On the other hand, when it is less than 30 volume %, it is not possible to sufficiently obtain the continuous penetration voids in stress damping layer 8. Therefore, it is not possible to obtain a sufficient oxygen penetration through stress damping layer 8. With this, element 1 may be broken. It is possible by containing 30-50 volume % of the void forming agent to obtain an oxygen-concentration detecting element having a superior formability of stress damping layer 8 and the element break prevention. The above-mentioned range of 30-50 volume % may be further limited to 30-40 volume %.

It is possible to form a large amount of continuous penetration voids by adding a large amount (e.g., 45 volume %) of the void forming agent, thereby having a sufficient penetration of oxygen, as compared with a small amount (e.g., 9.5 volume %) of the void forming agent.

**Table 3**

| | Amount of Void Forming Agent | | |
|---|---|---|---|
| | Less than 30 vol. % | 30 to 50 vol. % | Not less than 51 vol. % |
| Formability of Reference Electrode | Superior | Superior | Inferior |
| Existence of Continuous Penetration Voids | No | Yes | Yes |

In operation of oxygen-concentration detecting element 1, oxygen in the atmosphere is collected around reference electrode 6. Upon this, since stress damping layer 8 has a porous structure, excessive oxygen is discharged to an end portion of element 1, thereby preventing pressure increase of the element interior by oxygen.

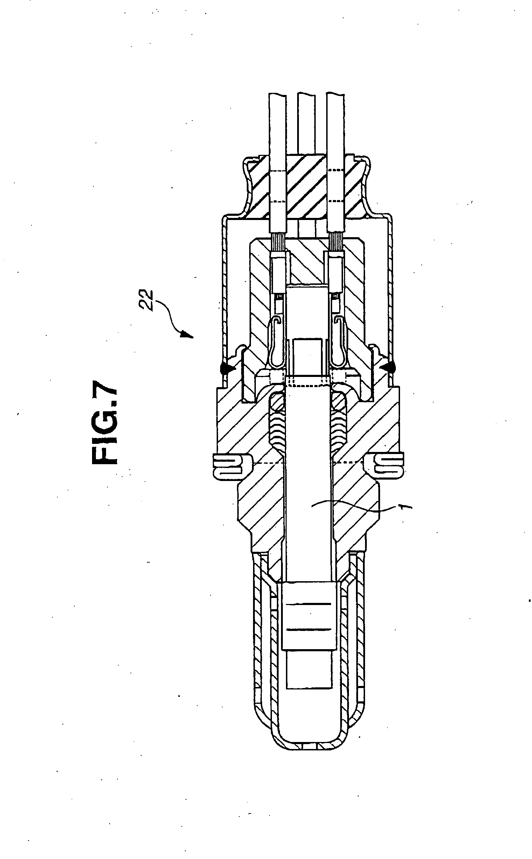

The completed element 1 can be built in oxygen sensor 22, as shown in Fig. 7.

The entire contents of basic Japanese Patent Applications 2004-172402 (filed June 10, 2004) and 2004-172414 (filed June 10, 2004), of which priorities are claimed in the present application, are incorporated herein by reference.

Although the invention has been described above by reference to certain embodiments of the invention, the invention is not limited to the embodiments described above. Modifications and variations of the embodiments described above will occur to those skilled in the art, in light of the above teachings. For example, the above-mentioned rectangular window opening 9a of dense layer 9 may be modified to have a circular, elliptic or triangular shape. As another example, core rod 2 of cylindrical shape may be modified to have a flat outer surface. The scope of the invention is defined with reference to the following claims.

## Claims

1. An oxygen-concentration detecting element comprising:
a base member constructed of an insulating material, an outer surface of the base member having a first position and a second position that is different from the first position;
an electric heater layer formed on the first position of the base member to generate a heat when electrically energized; and
an oxygen-detecting laminated unit formed on the second position of the base member, the unit including:
(a) a solid electrolyte layer that is activated by the heat from the electric heater layer;
(b) an outer electrode formed on an outer surface of the solid electrolyte layer; and
(c) an inner electrode formed on an inner surface of the solid electrolyte layer to be opposed to the outer electrode, the inner electrode being constructed of a noble metal material and a plurality of voids dispersed in the noble metal material, the voids being derived from a void forming agent that has been contained in an amount of 30-50 volume %, based on a total volume of the noble metal material, prior to a baking for producing the oxygen-concentration detecting element.

2. An oxygen-concentration detecting element according to claim 1, wherein the void forming agent of the inner electrode is in a form of particles having an average particle diameter of 5µm or less.

3. An oxygen-concentration detecting element according to claim 1, wherein the base member is a cylindrical solid member having a cylindrical outer surface.

4. An oxygen-concentration detecting element according to claim 3, wherein the electric heater layer and the oxygen-detecting laminated unit are placed at diametrically opposed portions of the cylindrical solid member.

5. An oxygen-concentration detecting element according to claim 1, wherein the noble metal material of the inner electrode is one selected from the group consisting of gold, silver, ruthenium, rhodium, palladium, osmium, iridium, and platinum.

6. An oxygen-concentration detecting element according to claim 1, further comprising a penetration layer for allowing penetration of oxygen through the penetration layer, the penetration layer being formed between the outer surface of the base member, and the oxygen-detecting laminated unit at the second position of the base member, the penetration layer being extended in a direction along an axis of the base member from a position of the oxygen-detecting laminated unit.

7. An oxygen-concentration detecting element according to claim 6, wherein the penetration layer is constructed of a ceramic mixture containing 10-80 wt% of an insulating material and a solid electrolyte material.

8. An oxygen-concentration detecting element according to claim 7, wherein the penetration layer has a porous structure provided with a plurality of voids derived from a void forming agent that has been contained in an amount of 30-50 volume %, based on a total volume of the ceramic mixture, in the ceramic mixture, prior to the baking for producing the oxygen-concentration detecting element.

9. An oxygen-concentration detecting element according to claim 6, wherein the penetration layer is constructed of 100% of an insulating material.

10. A method of producing an oxygen-concentration detecting element, comprising the steps of:
(a) preparing a base member constructed of an insulating material to have an outer surface having a first position and a second position that is different from the first position;
(b) forming an electric heater layer on the first position of the base member to generate a heat when electrically energized;
(c) forming an inner electrode on the second position of the base member, the inner electrode being constructed of a noble metal material and a void forming agent that is in an amount of 30-50 volume %, based on a total volume of the noble metal material;
(d) forming a solid electrolyte layer on the inner electrode;
(e) forming an outer electrode on the solid electrolyte layer such that there is provided an oxygen-detecting laminated unit including the solid electrolyte layer and the inner and outer electrodes between which the solid electrolyte layer is operatively sandwiched and that the solid electrolyte layer is activated by the heat from the electric heater layer; and
(f) baking a green body having the base member, the electric heater and the oxygen-detecting laminated unit such that the void forming agent disappears to produce a plurality of voids in the inner electrode and to make the inner electrode have a porous structure.

11. A method according to claim 10, wherein the base member is formed into a cylindrical solid member by the step (a), and each of the steps (b), (c), (d) and (e) is conducted by a curved-surface screen printing.

12. A method according to claim 10, wherein the noble metal material of the inner electrode is one selected from the group consisting of gold, silver, ruthenium, rhodium, palladium, osmium, iridium, and platinum.

13. An oxygen-concentration detecting element comprising:
a base member constructed of an insulating material, an outer surface of the base member having a first position and a second position that is different from the first position;
an electric heater layer formed on the first position of the base member to generate a heat when electrically energized;
an oxygen-detecting laminated unit formed on the second position of the base member, the unit including a solid electrolyte layer and a pair of electrodes between which the solid electrolyte layer is operatively sandwiched, the solid electrolyte layer being activated by the heat from the electric heater layer; and
a penetration layer for allowing penetration of oxygen through the penetration layer, the penetration layer being formed between the outer surface of the base member and the oxygen-detecting laminated unit at the second position of the base member, the penetration layer being extended in a direction along an axis of the base member from a position of the oxygen-detecting laminated unit.

14. An oxygen-concentration detecting element according to claim 13, wherein the penetration layer is constructed of a ceramic mixture containing 10-80 wt% of an insulating material and a solid electrolyte material.

15. An oxygen-concentration detecting element according to claim 14, wherein the penetration layer has a porous structure provided with a plurality of voids derived from a void forming agent that has been contained in an amount of 30-50 volume %, based on a total volume of the ceramic mixture, in the ceramic mixture, prior to a baking for producing the oxygen-concentration detecting element.

16. An oxygen-concentration detecting element according to claim 13, wherein the penetration layer is constructed of 100% of an insulating material.

17. An oxygen-concentration detecting element according to claim 13, wherein the base member is a cylindrical solid member having a cylindrical outer surface.

18. An oxygen-concentration detecting element according to claim 17, wherein the electric heater layer and the oxygen-detecting laminated unit are placed at diametrically opposed portions of the cylindrical solid member.

19. An oxygen-concentration detecting element according to claim 14, wherein the insulating material is alumina and the solid electrolyte material is zirconia.
